# EUROPEAN PATENT SPECIFICATION

(11) **EP 0 737 032 B1**
(45) Date of publication and mention of the grant of the patent: **15.03.2000**
(21) Application number: 95904689.7
(22) Date of filing: 30.12.1994
(51) Int. Cl.: A01K 11/00

(54) **ELECTRONIC ANIMAL IDENTIFICATION DEVICE**
ELEKTRONISCHE EINRICHTUNG ZUR IDENTIFIKATION VON TIEREN
DISPOSITIF ELECTRONIQUE D'IDENTIFICATION D'ANIMAUX

(30) Priority: 31.12.1993 IE 931017
(43) Date of publication of application: 16.10.1996
(73) Proprietor: Kilroy, Michael Maxwell, Oldcastle, Co. Meath (IE); Stafford, Rodney Arthur, Glencree, Co. Wicklow (IE)
(72) Inventor: Kilroy, Michael Maxwell, Oldcastle, Co. Meath (IE); Stafford, Rodney Arthur, Glencree, Co. Wicklow (IE)
(74) Representative: Parkes, Andrew John Aykroyd
(86) International application number: IE9400062
(87) International publication number: WO9517809

(56) References cited:
- WO-A-93/05648
- WO-A-94/22295
- AU-A- 9 463 038
- AU-B- 68 793
- DE-A- 4 317 340
- NL-A- 9 201 527
- US-A- 4 262 632
- PATENT ABSTRACTS OF JAPAN, vol. 94, no. 10(-); & JP,A,06276877 (SAAJI MIYAWAKI KK), 04-10-1994

## Description

### Technical field

The present invention relates to electronic devices for use in identification of ruminant animals, particularly cattle or sheep. The invention relates in particular to a bolus for administration to a ruminant animal so as to be retained in the rumen or reticulum of the animal, the bolus including an electronic animal identification device housed therein.

In this context "electronic" should be given a wide interpretation to include all forms of device making use of or responding to electromagnetic radiation.

### Prior Art

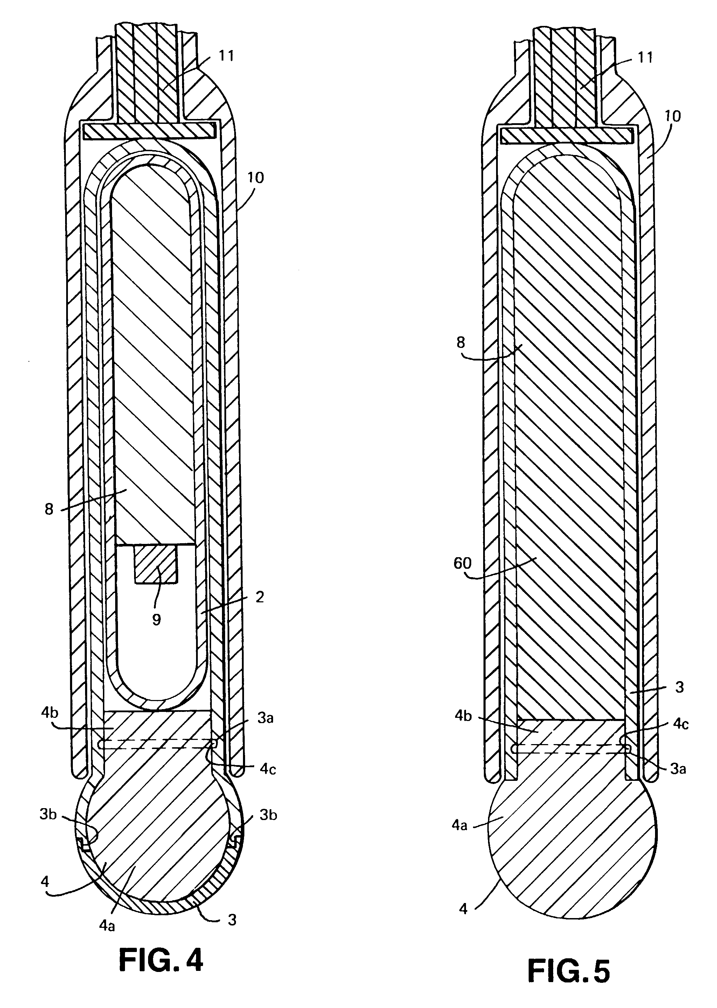

United States Patent No. 4,262,632 to Hanton et al. describes an electronic identification system for livestock according to the preamble of claim 1 and comprising a transmitter bolus which may be orally administered to an animal and which may be made to reside in the second stomach or reticulum by weighting to produce the proper specific gravity. Hanton et al. teach that the particular specific gravity required may vary somewhat for different animals, but that little success is achieved with values of less than about 1.5 specific gravity, successful retention has been achieved with specific gravities of 1.7, and permanent retention is assured with specific gravities of 2 or greater. Hanton et al. describe and illustrate a generally cylindrical bolus containing electronic components, a battery or other energy storage device, and ballast to ensure the necessary specific gravity. In Figure 4 Hanton illustrates a bolus in which the electronic components are located generally in one half of the bolus and the ballast and battery or energy storage are located generally in the other half of the bolus.

WO 93/05648 in the names of the present Applicants describes a bolus including an electronic identification device and further including a permanent visual representation of the animal identification so as to assist in proper identification when the bolus is retrieved from a dead animal.

### Concurrent Art

In the following paragraphs a number of patent applications are acknowledged which were filed before but published after the claimed priority date of the present application.

AU-649212-A to Brady describes an animal identification apparatus comprising a passive transponder enclosed in a porcelain capsule with a specific gravity of 1.75 or greater and containing a magnetic plug for ensuring recovery after slaughter. The capsule is filled with a settable liquid to provide the desired specific gravity as well as to provide for the transponder to be held in an operative position within the capsule.

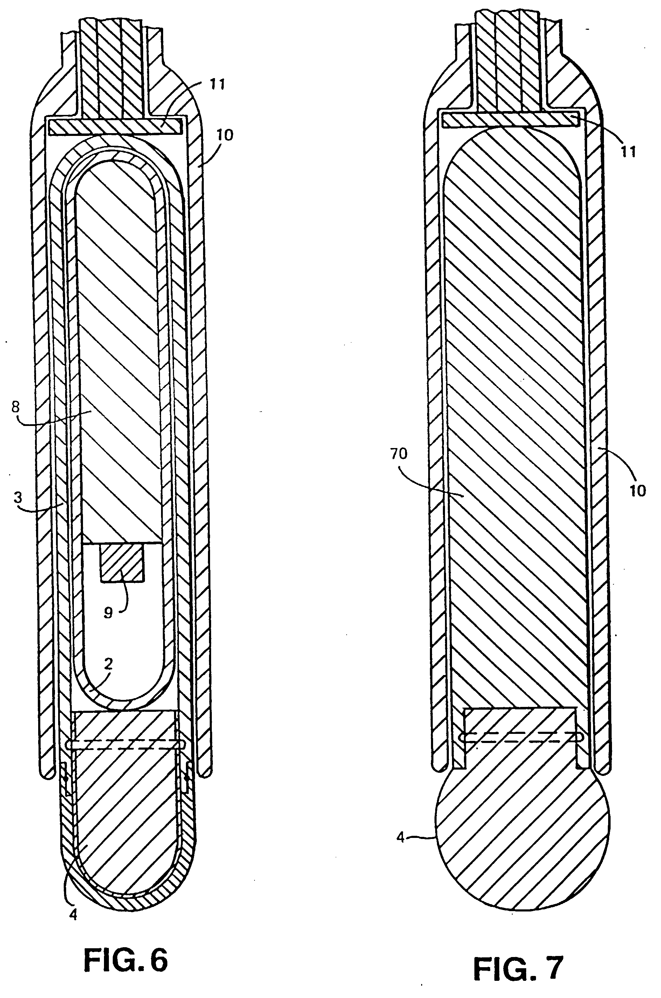

WO 94/22295-A in the name Miyawaki describes an internal individual identification apparatus for animals used so that the apparatus stays in a live body of a domestic animal without hurting the live body, the apparatus being formed so that the apparatus can be recovered easily after the domestic animal has been slaughtered. The apparatus rests in the first or second stomach of a ruminant animal. Various constructions are illustrated. Figure 4 illustrates a capsule or bolus including electronic components occupying a little over half of the volume thereof, and a weight occupying some of the remaining volume, the weight being intended to keep the bolus in the stomach. Figure 5(a) illustrates a similar construction, the electronic components being different. Figure 6(a) illustrates a very different arrangement, in this construction spreadable "wings" are provided which open out after the bolus has entered the animal, so as to prevent regurgitation.

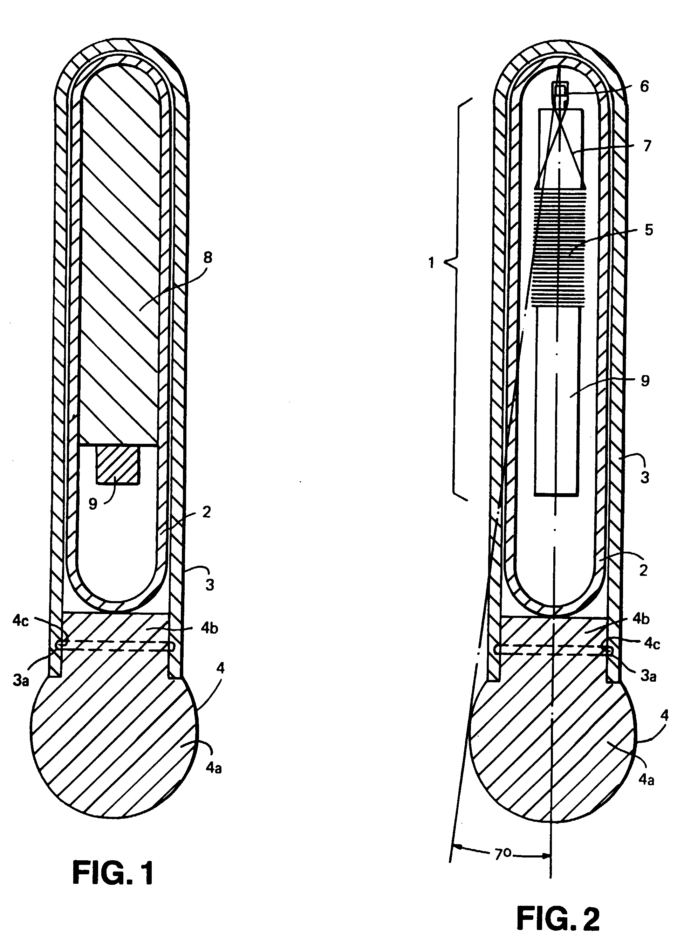

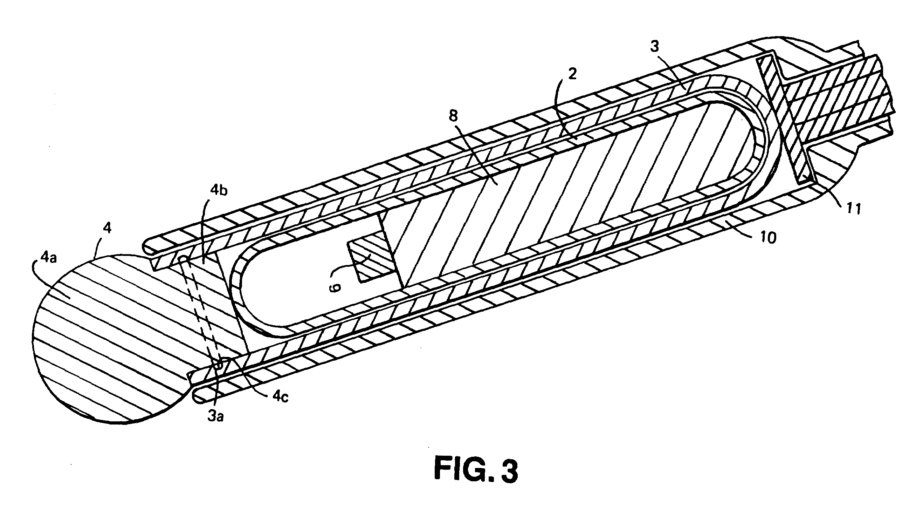

NL-920 1527 in the name Nedap acknowledges Hanton's teaching relating to specific gravity and proposes that the weight be unequally divided over the length of the bolus. As shown in Figure 1 of Nedap, which is not to scale, the stomach contains liquid with a semi-solid layer floating thereon. Nedap proposes that the inequality of weight distribution of the bolus be such that the bolus should tend to adopt a vertical orientation in the liquid. The purpose of this vertical orientation is to facilitate signal reading using a reading device located on the floor beneath the animal. Figure 3 illustrates a construction in which the bolus contains ballast extending from one end (the lower end) along approximately half the length of the bolus. Figure 4 illustrates an alternative construction in which the bolus is encased in an outer casing made up of two parts, a first (upper) part of light plastic material extending over slightly more than half the length of the bolus, and a second (lower) part of heavier ceramic material extending over the remainder of the length of the bolus. In each construction the upper part of the bolus necessarily has a specific gravity of less than approximately one (<1) so as to float in the liquid and the capsule has an overall specific gravity of between 1.7 and 2, at or below the lower limit proposed by Hanton.

### Object and Summary of the Invention

We have found that a bolus of specific gravity greater than 2 generally sinks to the bottom of the rumen or reticulum, and is retained. However, we have also found that in a small but nevertheless significant number of cases, the animal very quickly regurgitates the bolus, particularly animals which are old enough to ruminate and are being fed on a high fibre diet. The number of cases in which regurgitation takes place may be small, perhaps only a few percent of cases, but even this number is unacceptable bearing in mind that animal identification techniques are used to combat fraud and in disease control.

An object of the present invention is to reduce the incidence of regurgitation.

The invention provides a bolus for administration to a ruminant animal so as to be permanently retained in the rumen or reticulum of the animal, the bolus having an electronic identification device housed therein, the bolus being provided with ballast in the form of a weight so as to possess the necessary specific gravity of greater than 2, the weight being located nearer to one end of the bolus than to the other end, characterised in that the weight is a substantial metal weight concentrated at one extremity of the bolus so that the centre of gravity of the bolus is near said extremity, to the extent that the bolus tends to adopt a vertical orientation in a semi-solid floating layer contained within the rumen or reticulum and to sink rapidly through the said semi-solid floating layer.

It is believed that the reason some animals very quickly regurgitate the prior art boluses is that the boluses may take some time, for example several hours, to sink through the contents of the rumen or reticulum, in particular through the semi-solid layer floating on the liquid layer. It is believed that it is during these few hours that the risk of regurgitation exists. A bolus according to the invention should tend towards the vertical in the semi-solid layer and sink much more rapidly and accordingly the risk of regurgitation should be greatly reduced.

The bolus of the invention may be contrasted with various boluses previously described. In the Brady bolus the weight is almost exactly evenly distributed and the specific gravity is 1.75. In the Hanton bolus, and likewise the Miyawaki bolus, because of the arrangement of the various components within the bolus, the weight is probably located more towards one end, but no special significance is attached to the weight distribution. In the Nedap bolus the weight is intentionally distributed unevenly, but only to the extent necessary to tend towards a vertical position when floating in liquid, and the overall specific gravity is less than 2. None of the prior art or concurrent applicants appears to have appreciated the importance of rapid sinkage through the semi-solid layer in the rumen.

Preferably the ballast is in the form of a high density material, to minimize the size thereof.

Preferably the high density material is in the form of solid metal. None of the prior art or concurrent applicants has suggested the use of solid metal through which radio frequency signals will not readily pass.

Preferably, the bolus has a centre of gravity more than three fifths, preferably more than two thirds and even more preferably more than three quarters way along the length thereof.

Preferably the overall specific gravity of the bolus is equal to or greater than approximately 2.7, even more preferably is equal to or greater than approximately 3.5.

Preferably the bolus is adapted to be received in the barrel of a balling gun so that the weight is at the open or leading end of the barrel, to facilitate correct orientation.

Preferably a gap is provided between electronic components forming part of the electronic identification device and the weight such as to ensure minimum interference with the reading range of a scanner used to read the identification device. It is desirable to reduce any "blind spot" as much as possible because it is envisaged that boluses according to the invention will be read automatically by a stationary scanner. For example the scanner may be mounted on or adjacent to a cattle crush, and a line of cattle may progress one by one quickly through the cattle crush.

Preferably, the angle between the axis of the bolus and a line drawn from the furthest point of the electronic components through the outer edge of the weight is preferably not more than 11° (eleven degrees), even more preferably not more than about 7° (seven degrees).

Preferably, the weight is in the form of a head and neck, with the neck engaged in an end of the bolus.

Preferably the bolus is made of glass to provide an effective moisture seal encased in a resilient or less fragile material such as plastics material to avoid any possibility of broken glass contacting the innards of a live animal.

### Brief Description of the Drawings

The invention will now be described more particularly with reference to the accompanying drawings which show, by way of example only, a number of constructions of bolus according to the invention. In the drawings:
Figure 1 shows a first construction comprising a substantially cylindrical bolus in the vertical orientation which it adopts under its own weight, and is an axial mid section of the bolus except that the epoxy resin for holding the electronic components in position in the bolus is shown in non-mid section;
Figure 2 is similar to Figure 1, but shown without epoxy resin to reveal the electronic components which are not shown in section;
Figure 3 is a view of the first construction similar to that shown in Figure 1, but showing the bolus in an inclined orientation loaded into the barrel of a balling gun used to administer the bolus to an animal;
Figure 4 shows a second construction of bolus, loaded into a balling gun;
Figure 5 shows a third construction of bolus loaded into a balling gun;
Figure 6 shows a fourth construction of bolus loaded into a balling gun; and
Figure 7 shows a fifth construction of bolus loaded into a balling gun.

Referring to Figures 1, 2 and 3 the bolus comprises electronic components generally designated 1 including a ferrite rod 9, coil 5, integrated circuit 6, connections 7 between coil and integrated circuit, which are well known from the prior art and will not be further described, a sealed inner shell 2 made of glass, an open ended outer shell 3 made of hard transparent plastics material which is resistant to attack by acids, for example one of the range of ULTEM (Trade Mark) engineering thermoplastics available from General Electric Plastics Europe based on polyetherimide resins, a metal weight 4 shaped in the form of a head 4a and a neck 4b, the latter being provided with external beading 4c which is a snap fit in a corresponding circumferential groove or grooves 3a in the internal surface of the outer shell 3, and a body of epoxy resin 8 for holding the electronic components in position.

Alternatively in a variant (not shown) the external beading may be part of the internal surface of the outer shell 3 with the corresponding groove or grooves being provided in the neck 4b.

As will be appreciated from Figures 1, 2 and 3, the centre of gravity is located near the end of the bolus at which the weight 4 is located so that when the bolus reaches the rumen or reticulum it will tend to adopt the vertical orientation as shown in Figures 1, 2 and 3. Also, as can readily be appreciated from Figures 1, 2 and 3, the weight 4 has a smooth surface. Thus the bolus encounters minimum frictional resistance when sinking through the contents of the rumen or reticulum and therefore sinks more rapidly.

Location of the weight 4 at the end of the bolus also reduces the likelihood of the material of the weight 4 interfering with radio signals to and from the electronic components 1. This likelihood of interference is minimized by the relative proportions of the diameter of the weight 4 to the distance between the weight 4 and the electronic components 1. These proportions should be such that the angle between the bolus axis and a line drawn between the furthest end of the electronic components 1 and the outer edge of the weight 4 should not be greater than 11°.

The weight 4 may be made of any physiologically acceptable material of sufficient density to achieve the required specific gravity, centre of gravity and total weight without unduly enlarging the bolus so that it may be safely administered to smaller ruminants such as calves and sheep. Examples of suitable materials may include copper, mild steel and stainless steel. Use of such materials would also enable detection of the presence of a bolus with a metal detector in the unlikely event of any failure of the electronic components 1.

According to a further feature of the invention the weight 4 may be made of a material which is attracted to a magnet. One example of a possible material is mild steel. This feature facilitates retrieval of the bolus after slaughter if required. However this feature is not recommended if the bolus is to be used for fraud prevention, as the provision of a material which is attracted to a magnet could facilitate removal of the bolus from a live animal.

Referring now to Figure 3, the bolus is shown located in the barrel of a balling gun. The drawing shows the barrel 10 and the plunger 11. The drawing emphasises the extent to which the ballast is in fact concentrated at one end of the bolus, only just penetrating into the open end of the barrel 10 and having a maximum diameter greater than the internal diameter of the barrel 10. Also, from the drawing it will be appreciated that this ensures that the bolus is administered to the animal with the weight 4 at the leading end thereof, thereby facilitating the correct orientation of the bolus for rapid sinkage. The bolus is retained in the barrel 10 by being a sufficiently tight friction fit.

Referring now to Figure 4, the second construction differs from the first construction in that the outer shell 3 of plastics material completely surrounds the weight 4. The outer shell 3 is in two parts and the joint between these two parts is located at the widest part of the outer shell 3 to allow assembly. The joint may be in the form of a circumferential equatorial bead and groove or may be jointed using a method such as sonic welding or with a solvent or adhesive.

Referring now to Figure 5, the third construction differs from the first construction in that no glass inner shell is provided. Epoxy resin or other plastic 60 is provided which surrounds and protects the electronic components 1, and the resin 60 is poured directly into the "ULTEM" shell 3.

Referring now to Figure 6, the fourth construction differs from the first construction in that the weight 4 has a "bullet" shape and is completely surrounded by plastics material shell 3 which is contained in the barrel 10 as a sufficiently tight friction fit.

Referring now to Figure 7, the fifth construction differs from the first construction in that neither an inner nor an outer shell is provided, instead the electronics components (not shown in Figure 7) are integrally moulded into a solid block 70 of plastic or resin.

### Product Specification For Live Testing Using 50 g Weight (Figures 1, 2 and 3)

By way of example, typical measurements of a bolus for use in cattle are as follows:

Bolus (including outer casing in plastics material and ballast weight): overall length 105 mm, greatest diameter 22 mm.

Stainless steel ballast weight (overall): 22 mm greatest diameter, 26 mm in length, weight 50 g.

Sealed glass case housing electronic components: 13 mm diameter x 75 mm in length, weight approximately 22 g, specific gravity approximately 2.0.

Plastic casing (overall) to which ballast weight is attached: 89 mm long x 18 mm diameter, with an average wall thickness of preferably not more than 2 mm.

In the assembled bolus the centre of gravity is approximately three-quarters way along the length of the bolus. The angle between the longitudinal axis of the bolus and a line drawn between the furthest end of the electronic components 1 is approximately 7° (seven degrees) (see Figure 2). The specific gravity is approximately 3.5. The total weight is approximately 84 g.

For smaller ruminants such as sheep the boluses may be smaller but should retain approximately similar proportions, specific gravity, centre of gravity and ratio of weight to surface area of the larger model.

### Live Test Results

A preliminary study using glass encapsulated boluses with a specific gravity of 2.0 met with only limited success.

Since the priority application IES931017 was filed tests have been carried out using the constructions described above. The results have become available, and these are described below.

500 glass encapsulated electronic boluses were used for the study, some of which were recovered and reused so that more than 500 cattle were tested. The boluses were encapsulated in plastic casing, incorporating at one end a stainless steel weight of 23, 30 or 50 g. This provided a bolus with a specific gravity above 2.7.

A weighted bolus was administered orally to 544 cattle, aged 0.5 to 60 months. The added stainless steel weights incorporated in the boluses were: 23 g (41 cattle), 30 g (172 cattle) and 50 g (331 cattle). Boluses with 50 g weights correspond to Figures 1, 2 and 3 and are fully described under "Product Specification for Live Testing Using 50 g Weight (Figures 1, 2 and 3)", whereas boluses with 23 g and 30 g added weights correspond to the construction briefly described with reference to Figure 6.

Readings were taken at intervals after administration. A bolus was deemed a failure if it could not be read.

Tables 1 to 9 summarise the results. Bolus recovery at slaughter presented no problems: all were recovered from the reticulum or from the area immediately nearby and it did not prove necessary to employ a magnet. Before removing ruminal digesta, boluses were removed easily via a small incision through the ruminal or reticular wall. To date, boluses with the 23 g added weight had a success rate of 97.6% (40/41) reading, 2.4% loss, (Table 1). Boluses with the 30 g added weight had a success rate of 97.7% (168/172) reading (Tables 2 to 5 and 10). Boluses with the 50 g added weight had a success rate of 99.7% (330/331) reading (Tables 6 to 10).

### Conclusions

A weighted ruminal plastic bolus, encapsulating an electronic transponder, was highly successful as a method of tamper-proof electronic animal identification.

Boluses which incorporated a 23 g weight were 97.6% successful; the 2.4% loss (in 1/41 cattle) occurred before Day 3.

Boluses which incorporated a 30 g weight were 97.7% successful to date (168/172 cattle). The 2.3% loss occurred some time after Day 30 and may have been due to the outer casings coming apart due to wear as the plastic caps were slightly loose before insertion in the animals. Two of the boluses recovered from the 57 slaughtered animals (Table 2) had in fact lost their outer casings and weights.

Boluses which incorporated a 50 g weight were 99.7% successful (in 330/331 cattle). It has not yet been ascertained whether the one bolus which is not reading is still inside the animal. There is a possibility that the glass casing may have been cracked during assembly, allowing moisture to penetrate.

Recovery of the boluses at slaughter presented no problems: all were located and removed within seconds.

The type of diet on which the animals were fed at time of insertion did not influence retention and reading rate. At the time of insertion in the 544 cattle, 227 were indoors on a diet of grass silage, 208 were at pasture on a diet of grass only, 12 were indoors on a diet of 75% barley straw, and 97 (calves) were indoors on a diet of milk replacer and concentrate.

**TABLE 1**

| | | |
|---|---|---|
| The retention and reading rates for plastic encapsulated electronic rumen transponders incorporating a 23 g added weight are set out below. The boluses were inserted into cattle weighing 500 kg and the cattle were slaughtered five months later. | | |

| | **Number Reading** | **Percentage Reading** |
|---|---|---|
| Day 1 | 41 | 100 |
| Day 3 | 40 | 98 |
| Day 7 | 40 | 98 |
| Day 14 | 40 | 98 |
| Day 150 | 40 | 98 |

**TABLE 2**

| | | |
|---|---|---|
| The retention and reading rates for plastic encapsulated electronic rumen transponders incorporating a 30 g added weight are set out below. The boluses were inserted into cattle weighing 480 kg and the cattle were slaughtered five months later. | | |

| | **Number Reading** | **Percentage Reading** |
|---|---|---|
| Day 1 | 57 | 100 |
| Day 3 | 57 | 100 |
| Day 7 | 57 | 100 |
| Day 14 | 57 | 100 |
| Day 130 | 57 | 100 |

**TABLE 3**

| | | |
|---|---|---|
| The retention and reading rates for plastic encapsulated electronic rumen transponders incorporating a 30 g added weight are set out below. The boluses were inserted into steers of 8 months of age. | | |

| | **Number Reading** | **Percentage Reading** |
|---|---|---|
| Day 1 | 54 | 100 |
| Day 3 | 54 | 100 |
| Day 7 | 54 | 100 |
| Day 14 | 54 | 100 |
| Day 260 | 54 | 100 |
| Day 330 | 54 | 100 |

**TABLE 4**

| | | |
|---|---|---|
| The retention and reading rates for plastic encapsulated electronic rumen transponders incorporating a 30 g added weight are set out below. The boluses were inserted into adult beef cows. | | |

| | **Number Reading** | **Percentage Reading** |
|---|---|---|
| Day 1 | 40 | 100 |
| Day 3 | 40 | 100 |
| Day 7 | 40 | 100 |
| Day 14 | 40 | 100 |
| Day 90 | 40 | 100 |
| Day 170 | 38 | 95 |

**TABLE 5**

| | | |
|---|---|---|
| The retention and reading rates for plastic encapsulated electronic rumen transponders incorporating a 30 g added weight are set out below. The boluses were inserted into suckled beef-cross calves of 2 to 3 months of age. | | |

| | **Number Reading** | **Percentage Reading** |
|---|---|---|
| Day 1 | 14 | 100 |
| Day 3 | 14 | 100 |
| Day 7 | 14 | 100 |
| Day 14 | 14 | 100 |
| Day 30 | 14 | 100 |
| Day 105 | 12 | 86 |

**TABLE 6**

| | | |
|---|---|---|
| The retention and reading rates for plastic encapsulated electronic rumen transponders incorporating a 50 g added weight are set out below. The boluses were inserted into cattle weighing 450 kg and the cattle were slaughtered three and a half months later. | | |

| | **Number Reading** | **Percentage Reading** |
|---|---|---|
| Day 1 | 75 | 100 |
| Day 3 | 75 | 100 |
| Day 7 | 75 | 100 |
| Day 14 | 75 | 100 |
| Day 115 | 75 | 100 |

**TABLE 7**

| | | |
|---|---|---|
| The retention and reading rates for plastic encapsulated electronic rumen transponders incorporating a 50 g added weight are set out below. The boluses were inserted into calves of 2 weeks of age. | | |

| | **Number Reading** | **Percentage Reading** |
|---|---|---|
| Day 1 | 97 | 100 |
| Day 3 | 97 | 100 |
| Day 7 | 97 | 100 |
| Day 14 | 97 | 100 |
| Day 190 | 97 | 100 |
| Day 250 | 96 | 99 |

**TABLE 8**

| | | |
|---|---|---|
| The retention and reading rates for plastic encapsulated electronic rumen transponders incorporating a 50 g added weight are set out below. The boluses were inserted into adult beef cows. | | |

| | **Number Reading** | **Percentage Reading** |
|---|---|---|
| Day 1 | 64 | 100 |
| Day 3 | 64 | 100 |
| Day 7 | 64 | 100 |
| Day 14 | 64 | 100 |
| Day 90 | 64 | 100 |
| Day 170 | 64 | 100 |

**TABLE 9**

| | | |
|---|---|---|
| The retention and reading rates for plastic encapsulated electronic rumen transponders incorporating a 50 g added weight are set out below. The boluses were inserted into suckled beef-cross calves of 2 to 3 months of age. | | |

| | **Number Reading** | **Percentage Reading** |
|---|---|---|
| Day 1 | 90 | 100 |
| Day 3 | 90 | 100 |
| Day 7 | 90 | 100 |
| Day 14 | 90 | 100 |
| Day 30 | 90 | 100 |
| Day 105 | 90 | 100 |

**TABLE 10**

| | | | | |
|---|---|---|---|---|
| The retention and reading rates for plastic encapsulated electronic rumen transponders incorporating a 30 or 50 g added weight in animals offered a diet of 75% straw are set out below. The boluses were inserted into fattening heifers weighing 420 kg. | | | | |

| | **Number Reading** | | **Percentage Reading** | |
|---|---|---|---|---|
| Added Weight | 30 g | 50 g | 30 g | 50 g |
| Day 1 | 7 | 5 | 100 | 100 |
| Day 3 | 7 | 5 | 100 | 100 |
| Day 7 | 7 | 5 | 100 | 100 |
| Day 14 | 7 | 5 | 100 | 100 |
| Day 28 | 7 | 5 | 100 | 100 |

**TABLE 11**

| | | | |
|---|---|---|---|
| The overall summary of retention and reading rate on the date of last reading for plastic encapsulated electronic rumen transponders incorporating a 23, 30 or 50 g added weight is set out below. | | | |

| | **Added Weight** | | |
|---|---|---|---|
| | **23 g** | **30 g** | **50 g** |
| No. Reading / No. used | 40/41 | 168/172 | 330/331 |
| Percentage reading | 97.4 | 97.7 | 99.7 |

In addition to the tests on cattle described above, boluses with 50 g weights according to Figures 1, 2 and 3 have recently been administered to five adult sheep. 60 days after administration the boluses continue to give readings.

### Product Specification After Live Testing

After testing, some modifications are envisaged, and some features have been better understood and these are explained in the following paragraphs.
1) It is hoped that it will be possible to make just one size of bolus, which will be small enough to be administered to very small calves and yet heavy enough to sink through the rumen contents of adult animals on a high-fibre diet.
2) A stomach tube which is 20 mm diameter at its widest point has been used to feed colostrum directly into the stomach of the smallest newborn Jersey calves. It is believed that a problem which may arise in administering a 50 g weighted bolus to a very small calf is not just the diameter alone, but the combination of its diameter and length. This could make it difficult for the bolus to travel around the corner where the oesophagus meets the reticulum.
3) When the 50 g weight was designed a maximum diameter of 22 mm was chosen because it was the widest that could be used without an unacceptable reduction in reading range (from that end), and the spherical shape was chosen because it was desired to keep the overall length as short as possible, and minimise any discomfort for the animal. If the length of the bolus can be reduced, then the diameter of the weight should also be reduced.
4) It is possible to demonstrate mathematically how a large steel ball or sphere will sink more readily through a floating crust or "raft" than a smaller steel ball of equal density or specific gravity. As a convenient example, if one considers two spheres, one of 6 mm and the other of 24 mm diameter, and calculates the volume by multiplying the cube of the diameter (d³) x 0.5236 and the surface area of both by multiplying the square of the diameter (d²) x 3.1416, it can be seen that the volume or weight of the larger ball is 64 times greater than the smaller one.
   There is a more important factor, however, and that is the ratio of weight to surface area. This is four times greater for the large sphere than for the small one. This is why the larger ball will sink more readily than the smaller one through a semi-solid layer. Accordingly, miniaturization of the bolus may not simply involve scaling down the dimensions of the bolus, it may be necessary to choose a more dense material for the weight, for example it may be necessary to use lead.
5) Three important factors have therefore been identified which influence the physical performance of the bolus, namely:
   (a) Centre of gravity;
   (b) Specific gravity;
   (c) Ratio of total weight to surface area of leading or heavy end of bolus.
6) It is believed that the heavy end of the bolus should travel first down the animal's throat and that it should not be possible to fit the bolus the wrong way round in the applicator. It is thought that the outside diameter of the weighted end should be the same as that of the applicator. The larger the size of the weight, the more it will move the centre of gravity closer to the end of the bolus.

It will be appreciated that the invention is not limited to the specific details described herein which are given by way of example only, and that various alterations and modifications are possible within the scope of the claims.

## Claims

1. A bolus for administration to a ruminant animal so as to be retained in the rumen or reticulum of the animal, the bolus having an electronic identification device (1) housed therein, the bolus being provided with ballast in the form of a weight (4) so as to possess the necessary specific gravity of greater than 2, the weight (4) being located nearer to one end of the bolus than to the other end, characterised in that the weight (4) is a substantial metal weight concentrated at one extremity of the bolus so that the centre of gravity of the bolus is near said extremity, to the extent that the bolus tends to adopt a vertical orientation in a semi-solid floating layer contained within the rumen or reticulum and to sink rapidly through the said semi-solid floating layer.

2. A bolus according to claim 1 in which the centre of gravity is more than three fifths way along the length thereof.

3. A bolus according to claim 1 in which the centre of gravity is more than two thirds way along the length thereof.

4. A bolus according to claim 1 in which the centre of gravity is more than three quarters way along the length thereof.

5. A bolus according to any one of the preceding claims in which the specific gravity is equal to or greater than approximately 2.7.

6. A bolus according to any one of the preceding claims in which the specific gravity is equal to or greater than approximately 3.5.

7. A bolus according to any one of the preceding claims which comprises a casing (3, 70) and a weight (4) attached to the casing (3, 70) at one end thereof or surrounded by the casing (3,70) at one end thereof.

8. A bolus according to claim 7 in which the weight (4) is in the form of a head (4a) and a neck (4b), with the neck engaged in an end of the casing (3, 70).

9. A bolus according to claim 7 or 8 for administration to an animal by a balling gun having a barrel (10), the casing (3, 70) of the bolus being adapted to be located in the barrel (10) but the weight (4) or the weighted end of the bolus having a maximum diameter greater than the internal diameter of the barrel (10) to ensure that the weight (4) is at the open or leading end of the barrel (10), to facilitate correct orientation.

10. A bolus according to any one of the preceding claims in which a gap is provided between electronic components (1) forming part of the electronic identification device and the weight (4).

11. A bolus according to any of the preceding claims in which the angle between the axis of the bolus and a line drawn from the furthest point of the electronic components (1) through the outer edge of the weight (4) is not more than 11° (eleven degrees).

12. A bolus according to claim 11 in which the angle is equal to or less than approximately 7° (seven degrees).

13. A bolus according to any one of the preceding claims wherein the electronic identification device is sealed in a shell (2) made of glass encased in a resilient or less fragile material (3) such as plastics material.

14. A bolus according to any of the preceding claims having a sealed inner shell (2) of glass housing the electronic identification device (1) and an outer shell (3) of a resilient or less fragile material such as plastics material, the weight (4) being attached to the outer shell (3) at one end thereof or being surrounded by the outer shell (3) at one end thereof.

15. A bolus according to claim 14 wherein the weight (4) is attached to but not surrounded by the outer shell (3), and the weight (4) has a smooth surface to minimise frictional resistance when the bolus is sinking through the contents of the rumen or recticulum.

16. A bolus according to any of the preceding claims wherein the weight (4) is made of stainless steel.

## Patentansprüche

1. Bolus zur Verabreichung an einen Wiederkäuer, um im Pansen oder Retikulum des Tieres zurückgehalten zu werden, wobei der Bolus eine darin untergebrachte elektronische Identifikationsvorrichtung (1) besitzt, wobei der Bolus mit Ballast in der Form eines Gewichts (4) versehen ist, um die erforderliche relative Dichte von größer als 2 zu besitzen, wobei sich das Gewicht (4) näher am einen Ende des Bolus als am anderen Ende befindet, dadurch gekennzeichnet, daß das Gewicht (4) ein beträchtliches Metallgewicht ist, das auf ein äußerstes Ende des Bolus konzentriert ist, so daß das Zentrum der Schwerkraft des Bolus sich nahe dem äußersten Ende befindet, in dem Maß, daß der Bolus dazu tendiert, eine vertikale Orientierung in einer in dem Pansen oder Retikulum enthaltenen halbfesten treibenden Schicht anzunehmen und rasch durch die halbfeste, treibende Schicht abzusinken.

2. Bolus gemäß Anspruch 1, wobei sich das Zentrum der Schwerkraft weiter als drei Fünftel des Weges entlang der Länge von diesem befindet.

3. Bolus gemäß Anspruch 1, wobei sich das Zentrum der Schwerkraft weiter als zwei Drittel des Weges entlang der Länge von diesem befindet.

4. Bolus gemäß Anspruch 1, wobei sich das Zentrum der Schwerkraft weiter als drei Viertel des Weges entlang der Länge von diesem befindet.

5. Bolus gemäß mindestens einem der vorhergehenden Ansprüche, wobei die relative Dichte gleich oder größer als etwa 2,7 ist.

6. Bolus gemäß mindestens einem der vorhergehenden Ansprüche, wobei die relative Dichte gleich oder größer als etwa 3,5 ist.

7. Bolus gemäß mindestens einem der vorhergehenden Ansprüche, welcher eine Hülle (3, 70) und ein an der Hülle (3, 70) befestigtes Gewicht (4) an einem Ende davon oder umgeben durch die Hülle (3, 70) an einem Ende davon umfaßt.

8. Bolus gemäß Anspruch 7, wobei das Gewicht (4) die Form eines Kopfes (4a) und eines Halses (4b) hat, wobei der Hals in ein Ende der Hülle (3, 70) eingebunden ist.

9. Bolus gemäß Anspruch 7 oder 8 zur Verabreichung an ein Tier durch eine Kugelpistole mit einer Trommel (10), wobei die Hülle (3, 70) des Bolus so angepaßt wird, um in der Trommel (10) untergebracht zu werden, aber das Gewicht (4) oder das mit einem Gewicht versehene Ende des Bolus einen maximalen Durchmesser von größer als dem Innendurchmesser der Trommel (10) aufweist, um sicherzustellen, daß das Gewicht (4) sich am offenen oder vorderen Ende der Trommel (10) befindet, um eine exakte Ausrichtung zu erleichtern.

10. Bolus gemäß mindestens einem der vorhergehenden Ansprüche, wobei eine Lücke zwischen den elektronischen Komponenten (1), die Teil der elektronischen Identifikationsvorrichtung bilden, und dem Gewicht (4) vorgesehen ist.

11. Bolus gemäß mindestens einem der vorhergehenden Ansprüche, wobei der Winkel zwischen der Achse des Bolus und einer Linie, die vom äußersten Punkt der elektronischen Komponenten (1) durch die Außenkante des Gewichts (4) gezogen ist, nicht mehr als 11° (elf Grad) beträgt.

12. Bolus gemäß Anspruch 11, wobei der Winkel gleich oder weniger als ungefähr 7° (sieben Grad) beträgt.

13. Bolus gemäß mindestens einem der vorhergehenden Ansprüche, wobei die elektronische Identifikationsvorrichtung in einer Schale (2) aus Glas, die in ein elastisches oder weniger zerbrechliches Material (3) wie Kunststoffmaterial eingehüllt ist, versiegelt ist.

14. Bolus gemäß mindestens einem der vorhergehenden Ansprüche mit einer versiegelten inneren Schale (2) aus Glas, in welche die elektronische Identifikationsvorrichtung (1) untergebracht ist, und eine Außenschale (3) aus einem elastischen oder weniger zerbrechlichen Material wie Kunststoffmaterial, wobei das Gewicht (4) an der Außenschale (3) an einem Ende davon befestigt ist oder von der Außenschale (3) an einem Ende davon umgeben ist.

15. Bolus gemäß Anspruch 14, wobei das Gewicht (4) an der Außenschale (3) befestigt ist, aber nicht von dieser umgeben ist, und das Gewicht (4) eine glatte Oberfläche aufweist, um den Reibungswiderstand zu minimieren, wenn der Bolus durch den Inhalt des Pansens oder Reticulums absinkt.

16. Bolus gemäß mindestens einem der vorhergehenden Ansprüche, wobei das Gewicht (4) aus nichtrostendem Stahl besteht.

## Revendications

1. Bol destiné à être administré à un animal ruminant de manière à être retenu dans la panse ou dans le réticulum de l'animal, le bol comprenant un dispositif d'identification électronique (1) logé à l'intérieur, le bol étant équipé d'un ballast se présentant sous la forme d'un poids (4) de manière à posséder le poids spécifique nécessaire supérieur à 2, le poids (4) étant situé plus près d'une extrémité du bol que de l'autre extrémité, caractérisé en ce que le poids (4) est un poids métallique substantiel concentré à une extrémité du bol de sorte que le centre de gravité du bol est proche de ladite extrémité, au point que le bol tend à adopter une orientation verticale dans une couche flottante semi-solide contenue à l'intérieur de la panse ou du réticulum et à s'abaisser rapidement dans ladite couche flottante semi-solide.

2. Bol selon la revendication 1, dans lequel le centre de gravité est distant de plus des trois cinquièmes de la longueur du bol à partir d'une extrémité.

3. Bol selon la revendication 1, dans lequel le centre de gravité est distant de plus des deux tiers de la longueur du bol à partir d'une extrémité.

4. Bol selon la revendication 1, dans lequel le centre de gravité est distant de plus des trois quarts de la longueur du bol à partir d'une extrémité.

5. Bol selon l'une quelconque des revendications précédentes, dans lequel le poids spécifique est égal ou supérieur à environ 2,7.

6. Bol selon l'une quelconque des revendications précédentes, dans lequel le poids spécifique est égal ou supérieur à environ 3,5.

7. Bol selon l'une quelconque des revendications précédentes, qui comprend un boîtier (3,70) et un poids (4) fixé à une extrémité du boîtier (3,70) ou entouré par une extrémité du boîtier (3,70).

8. Bol selon la revendication 7, dans lequel le poids (4) se présente sous la forme d'une tête (4a) et d'un col (4b), le col s'engageant dans une extrémité du boîtier (3,70).

9. Bol selon la revendication 7 ou 8, destiné à être administré à un animal au moyen d'un pistolet comportant un canon (10), le boîtier (3,70) du bol étant adapté pour être situé dans le canon (10), mais le poids (4) ou l'extrémité pondérée du bol possédant un diamètre maximum supérieur au diamètre intérieur du canon (10) pour garantir que le poids (4) se situe au niveau de l'extrémité ouverte ou extrémité avant du canon (10) de manière à faciliter une orientation correcte.

10. Bol selon l'une quelconque des revendications précédentes, dans lequel un interstice est prévu entre des composants électroniques (1) faisant partie du dispositif d'identification électronique et le poids (4).

11. Bol selon l'une quelconque des revendications précédentes, dans lequel l'angle entre l'axe du bol et une droite passant par le point le plus éloigné des composants électroniques (1) et le bord extérieur du poids (4) n'est pas supérieur à 11° (onze degrés).

12. Bol selon la revendication 11, dans lequel l'angle est égal ou inférieur à 7° (sept degrés).

13. Bol selon l'une quelconque des revendications précédentes, dans lequel le dispositif d'identification électronique est renfermé de façon étanche dans une coque (2) formée de verre, enrobée dans un matériau élastique ou moins fragile (3) comme par exemple une matière plastique.

14. Bol selon l'une quelconque des revendications précédentes, comportant une coque intérieure en verre (2) fermée de façon étanche, logeant le dispositif d'identification électronique (1), et une coque extérieure (3) formée d'un matériau élastique ou moins fragile tel qu'une matière plastique, le poids (4) étant fixé au niveau d'une extrémité de la coque extérieure (3) ou étant entouré par une extrémité de la coque extérieure (3).

15. Bol selon la revendication 14, dans lequel le poids (4) est fixé à la coque (3), sans être entouré par cette dernière, et le poids (4) possède une surface lisse servant à réduire la résistance de frottement lorsque le bol s'abaisse à l'intérieur du contenu de la panse ou du réticulum.

16. Bol selon l'une quelconque des revendications précédentes, dans lequel le poids (4) est réalisé en acier inoxydable.
